(19) Europäisches Patentamt
European Patent Office
Office européen des brevets

(11) **EP 2 523 163 B1**

(12) **EUROPEAN PATENT SPECIFICATION**

(45) Date of publication and mention
of the grant of the patent:
**16.10.2019 Bulletin 2019/42**

(51) Int Cl.:
*G06T 7/80* *(2017.01)* *G06T 7/33* *(2017.01)*

(21) Application number: **11003828.8**

(22) Date of filing: **10.05.2011**

(54) **Method and program for calibrating a multicamera system**

Verfahren und Programm zur Kalibration eines Multikamera-Systems

Méthode et programme pour la calibration d'un système multicaméra

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.11.2012 Bulletin 2012/46**

(73) Proprietor: **Harman Becker Automotive Systems
GmbH
76307 Karlsbad (DE)**

(72) Inventors:
• **Natroshvili, Koba
76337 Waldbronn (DE)**
• **Gassmann, Bernd
76307 Karlsbad (DE)**

(74) Representative: **Grünecker Patent- und
Rechtsanwälte
PartG mbB
Leopoldstraße 4
80802 München (DE)**

(56) References cited:
**EP-A1- 2 200 311      US-A1- 2008 181 488**

• **GANDHI, T. ET AL: "Vehicle Surround Capture:
Survey of Techniques and a Novel
Omni-Video-Based Approach for Dynamic
Panoramic Surround Maps", IEEE
TRANSACTIONS ON INTELLIGENT
TRANSPORTATION SYSTEMS, vol. 7, no. 3,
September 2006 (2006-09), pages 293-308,
XP002659721, ISSN: 1524-9050, DOI:
10.1109/TITS.2006.880635**

**Description**

**Field of the Invention**

The present invention relates to a method of calibrating a camera system comprising a plurality of cameras having a predetermined intrinsic calibration, the cameras being provided on an object such as vehicle and covering a surrounding perimeter of the object

**Background of the Invention**

In modern objects such as vehicles there is a growing demand for obtaining information on the immediate surrounding of the object. For example, for a vehicle, the driver often desires information beyond sensors for controlling the parking distance. Such information may be particularly useful in unknown, narrow or confined spaces, or when other circumstances would prompt neither the driver nor a passenger, if any, exiting the vehicle to assist the driver. In such cases, it is often desired to provide a substantially overall picture presented on a control display, showing both the vehicle and its surroundings from a bird's eye perspective. Such a picture usually cannot be obtained from ultrasound sensors as are often used for sensing and controlling the parking distance. Instead, cameras are often used to obtain such a picture. The obtained image may be, usually, digitally presented on some control display which is easily visible for the driver or the person in control of the vehicle. This clear overview then enables the driver to manoeuvre the vehicle or object precisely even in confined space, without even turning his/her head. Such information might render millimetre precision even in rough terrain, such as off-road passages, avoiding rocks, trees, logs and other obstacles. Such information may also be particularly useful also when driving with a trailer. Scratches from flower tubs, walls etc. thus can be substantially avoided. The system may be useful both at day and at night, even while the vehicle is moving at low speed, and to avoid contact in narrow driving conditions, either with other vehicles or with non-moving items.

EP 2 200 311 A1 refers to a camera calibration device performing camera calibrations for projecting a plurality of camera images from a plurality of cameras onto a predetermined surface to combine them on the basis of the results after calibration patterns to be arranged in a common photographing area of the cameras.

Gandhi T. and Trivedi M. M. in IEEE Transactions on Intelligent Transportation System, Vol. 7, No. 3, September 2006, refer to a survey of techniques related to surround analysis and an omni-video-based approach for Dynamic Panoramic Surround Maps.

Such information may also be useful for objects which are partially or even fully under remote control.

Typically, to obtain a view of the surrounding substantially close to 360 deg circumference, at least two cameras are needed. Such cameras may be provided in the side mirrors of the vehicle. Data obtained from these cameras on the car and its surroundings may be processed by a central computer.

Further cameras may be integrated into the camera system at other locations of the object, thus, for example, serving to monitor traffic moving crosswise to the vehicle. An important issue is to avoid blind / black spots, that is, points on the perimeter of the vehicle which are not covered by any of the cameras of the system.

An important aspect of a camera system for providing such an overview picture is the calibration of the system.

A simple model for camera calibration is the model by Tsai which applies to a pin hole camera or likewise the pin hole model of perspective projection, which may serve to explain some of the basic parameters.

Tsai's camera model is based on the pin hole model of perspective projection. Given the position of a point in 3D world coordinates the model predicts the position of the point's image in 2D pixel coordinates. Tsai's model has 11 parameters, comprising five internal (also called intrinsic or interior) parameters, and six external parameters.

The internal parameters comprise f denoting the effective focal length of the pin hole camera, $\kappa_1$ denoting the 1st order radial lens distortion coefficient, Cx, Cy denoting the coordinates of center of radial lens distortion, and the piercing point of the camera coordinate frame's Z axis with the camera's sensor plane, sx denoting the scale factor to account for any uncertainty due to framegrabber horizontal scanline resampling.

The external (also called extrinsic or exterior) parameters comprise Rx, Ry, Rz denoting rotation angles (Euler angles) for the transform between the world and camera coordinate frames, and Tx, Ty, Tz denoting translational components for the transform between the world and camera coordinate frames. Indices x, y, and z may equivalently be denoted as 1, 2, and 3.

The internal parameters describe how the camera forms an image while the external parameters describe the position and orientation of the camera in the world coordinate frame. Calibration data for the model consists of 3D (x,y,z) world coordinates of a feature point (usually given in units of mm) and corresponding 2D coordinates (Xf,Yf) (typically given in units of pixels) of the feature point in the image. Two forms of calibration are possible: in a coplanar calibration the calibration points lie in a single plane in 3D, whereas in a non-coplanar the calibration points occupy a 3D volume. Explanations of the basic calibration algorithms are given in, for example "An Efficient and Accurate Camera Calibration Technique for 3D Machine Vision", Roger Y. Tsai, Proceedings of IEEE Conference on Computer Vision and Pattern Recognition, Miami Beach, FL, 1986, pages 364-374, and "A versatile Camera Calibration Technique for High-Accuracy 3D Machine Vision Metrology Using Off-the-Shelf TV Cameras and Lenses", Roger Y. Tsai, IEEE Journal of Robotics and Automation, Vol. RA-3, No. 4, August 1987, pages 323-344.

A different method of calibrating cameras is discussed in "A flexible new technique for camera calibration", Z. Zhang, IEEE Transactions on Pattern Analysis and Machine Intelligence, Vol.22, No.11, pages 1330-1334, 2000.

Systems of cameras are often calibrated by using markers provided at fixed positions. For such calibrations, the object such as the vehicle should be brought to a fixed position. The vehicle should further have a fixed orientation. Both requirements are a rather difficult and time-consuming task. This calibration approach is also rather difficult to perform in offsite demonstrations, where the entire calibration setup has to be precisely transferred or copied / reproduced. In any case, the marker positions and their relative positions to the object should be kept as precisely as possible.

## Summary of the Invention

The present invention provides a solution to the above-mentioned problems for calibrating a camera system. In particular, according to the present solution, the method for calibrating the camera system makes calibration very flexible, mobile and easy to accomplish, by providing the extrinsic parameters of all cameras of the camera system.

The present invention provides a method for calibrating a camera system according to claim 1. Preferred embodiments are subject of the dependent claims.

Taking into account a known intrinsic calibration, which is provided by a known method, the method according to the present invention focuses on the extrinsic parameters. By the above steps, typically all of the plurality of cameras can be calibrated by using a set of markers, such as a chequered board, which is assumed to provide points in a single plane, that is, coplanar. These boards may typically be quadratic and the boards may be substantially flat. Since the intrinsic camera parameters for each camera are already known from an intrinsic calibration, this provides the basis for determining the extrinsic parameters such as rotation and translation parameters. Since the set of markers is typically providing a number of points much larger than the number of unknowns in any system of linear equations (or linear system) used for determining the extrinsic parameters, any linear system set up will be over determined such that optimization may be applied.

In the method as described above, the field of view of each camera may at least partially overlap with at least one of its neighbouring cameras. The overlap of fields of view of the cameras used in the camera system provides the advantage of providing corresponding image points seen with different, that is, independent cameras of the camera system. Since the set of markers, its dimension and extension within the single plane usually is well known, the overlap further contributes to reduction of errors of the calibration, that is, the precise determination of the camera parameters.

In the method as described above the set of markers may be selected in the overlapping region of the field of view of neighbouring cameras. The set of markers typically is chosen in the overlap region of neighbouring cameras. For example, for cameras located within one plane, this would refer to the left and right neighbour of each camera, if possible to provide corresponding points for each camera.

In the method as described above for at least one of the plurality of cameras the respective set of markers comprises the origin such that the extrinsic parameters of the respective camera may refer to the origin. The origin of the world coordinate system as a reference point may thus be introduced.

The method as described above allows testing the calibration of the cameras relative to the neighbouring cameras. That is, the extrinsic parameters of a camera are expressed relative to one of its neighbours. However, these parameters are also provided relative to another neighbour of said camera. This is then successively continued for all cameras to obtain a set of equations which are suitable for further optimization.

The method as described above further comprises the step of (d) estimating a third set of extrinsic parameters for each of the plurality of cameras except the first camera relative to the origin based on the calculation of the second sets of extrinsic parameters. The origin, as already indicated above as a reference point provides the possibility to express the extrinsic parameters of any of the other cameras as viewed from one camera with respect to the origin, thereby providing the possibility for further information to be used in subsequent optimization.

The method as described above further comprises the step of (e) optimizing the sets of extrinsic parameters. Without noise of the measured values, the above estimated extrinsic parameters would be exact. However, since each measurement usually carries some uncertainty due to, for example, noise, an optimization step is necessary. Typically, a minimization problem may use the mean-least square method to minimize the estimates of the parameters. Such a method may be implemented by using the Levenberg-Marquardt algorithm, which combines Newton-Gauss and gradient descent methods.

In the method as described above the optimization minimizes the error of re-projections which use the estimation results of step (d). That is, re-projections of the set of markers chosen usually should yield a minimal error.

In the method as described above the optimization minimizes the differences between the results of step (c2). This is used as a further constraint for the minimization method as discussed above, which therefore reduces the number of free parameters in the minimization problem and improves convergence of the method.

In the method as described above the optimization may be further constrained by using additional set of markers at known positions in front of each camera. These are additional information to provide bounds on the parameters of the minimization problem, to further improve convergence of the problem. Further, it may also be possible to apply a maximum likelihood approach to the optimization problem instead of a least-square method.

In the method as described above, distortions perpendicular to the projection plane of a camera are typically approximated by polynomials. The distortions of the cameras may thus be approximated by polynomial approximation, that is, quickly to use functional approximations. In that respect it may also be possible to approximate the distortions by different functions, for example splines.

In the method as described above, the cameras may be fisheye-cameras. Usually, rectilinear cameras with a large opening angle that may be 120° or larger are very complex to use and costly to provide. Using fisheye-cameras typically provides the possibility to provide a robust and sufficiently easy to handle set of cameras. Typically, the horizontal opening angle of said cameras is not less than 175°. Such cameras may then also provide the possibility to view, at least partly, neighbouring cameras, which provides further redundant information for calibrating the extrinsic parameters.

In the method as described above the cameras may be symmetrically placed with respect to at least one symmetry axis of the object. In object, in particular with regard to a vehicle, such cameras may be provided in the left and right mirror of the vehicle. Further at least a camera may be provided in the front and/or in the rear of the vehicle. For larger objects, there may be additional or other positions for cameras chosen, such as near the rim of the roof of the object.

In the method as described above, the number of cameras may be four. This is a selection of cameras which may be used in systems such as the Surround-View system currently employed for some vehicle manufacturers.

According to the present invention there is further provided a computer program product comprising at least one computer readable medium having computer-executable instructions for performing the steps of the method of one of the claims 1 to 8 when run on a computer. That is, the invention provides for computer program product or an apparatus adapted for calibrating a camera system according to the method as described above. Said apparatus may comprise means for calibrating the above described camera system according to the above-described method.

The above and other aspects, features and advantages of the present invention will become more apparent from the following detailed description when taken in conjunction with the accompanying drawings in which:

### Brief Description of the Drawings

Figure 1:  A configuration of a camera system which can be calibrated according to the present invention.

Figure 2  Acquisition of cameras of a camera system which can be calibrated according to the present invention.

Figure 3  Schematic representation of the method for calibrating the extrinsic parameters of a camera system according to the present invention.

Figure 4  An example of a camera system comprising up to six cameras for viewing the surrounding perimeter of a vehicle.

### Detailed Description

In the following, a camera system is discussed having four cameras. The number of cameras should by no means be understood as limiting but merely as being chosen for explanatory purposes and the number of cameras may vary for different systems and different objects according to the specific application of the camera system as long as at least four cameras are present.

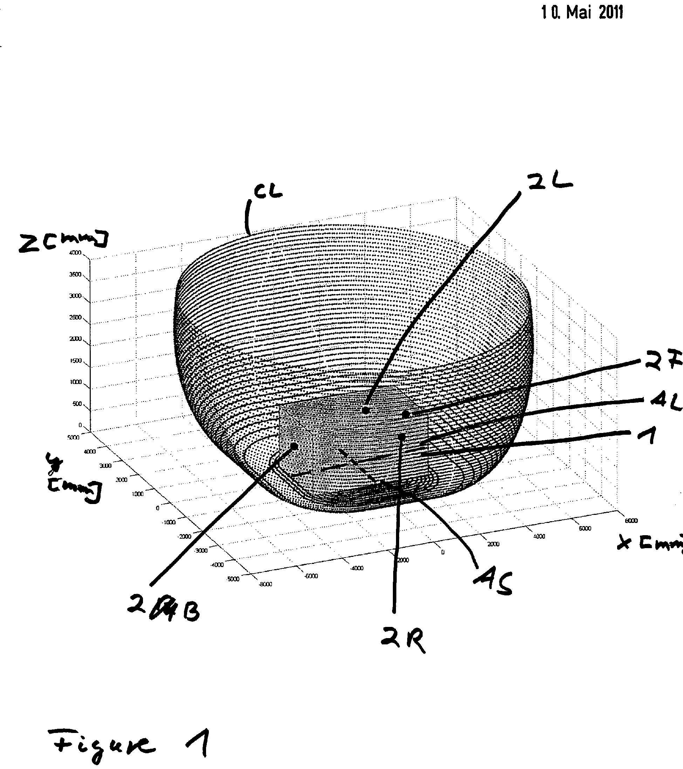

Figure 1 depicts an object 1 with a camera system comprising four cameras. The cameras are denoted as 2F, indicating the front camera, 2B, indicating the rear / back camera, 2L, indicating the left camera, and 2R, indicating the right camera. The object 1 is depicted as a substantially rectangular cuboid. The cameras 2F, 2B, 2L, and 2R are depicted as black spots, which are placed symmetrically with respect to a long axis, AL, and a short axis, AR, of the cuboid representing the object 1, for example a vehicle. In Figure 1, the cameras 2F, 2B, 2L, and 2R are positioned such that they are substantially on the same height, or position in z, representing the vertical axis in Figure 1. Figure 1 depicts the x-axis in units of millimeters from -8000 mm to 8000 mm, and the y-axis from -5000 mm to 5000 mm, respectively. The z-axis shows in units of millimeters a range from 0 to 5000 mm. It should be understood that these ranges are merely chosen for illustrative purposes and that other ranges may be used.

The cameras 2F, 2B, 2L, and 2R of the camera system have a large opening angle such as extra wide angle cameras. The opening angle of these cameras 2F, 2B, 2L, and 2R, may be, for example larger than 120°. The horizontal opening angle of these cameras may be up 175° and more. The cameras may alternatively be positioned symmetrically with respect to the perimeter of the object 1, to cover as much as possible the entire surrounding perimeter of the object. Contour lines CL are depicted as dashed lines in Figure 1. Due to constructional aspects of the object 1, for example of a vehicle, it may be more cumbersome to provide these cameras at the side of the object 1 to view the side directions. The cameras 2F, 2B, 2L, and 2R may therefore be provided at the outmost left and right points of the object 1, such as mirrors of the vehicle (not shown) to provide a sufficient view and coverage of the sides of the object 1.

The projection space of the cameras 2F, 2B, 2L, and 2R is indicated in Figure 1, wherein in Figure 1 distances are shown in units of millimeters. The bottom of the bowl-shaped projection surface of the object 1 is flat such that points on the bottom are substantially given in a plane, only.

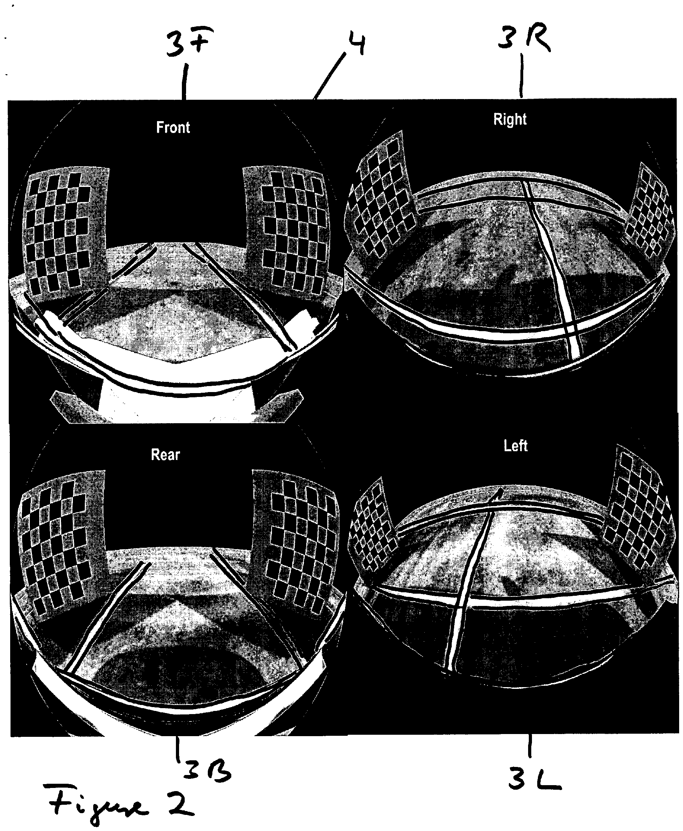

Figure 2 shows an example of a chequered test board 4 as viewed with four cameras such as fisheye-cameras, wherein the views with these cameras are denoted as 3F (front), 3B (rear/back), 3L (left), and 3R (right). The cameras producing the views of Figure 2 may correspond to the cameras 2F, 2B, 2L, and 2R as shown in Figure 1. Each of the cameras of Figure 2 show, for example a chequered test board in the plane of view of at least two of the cameras.

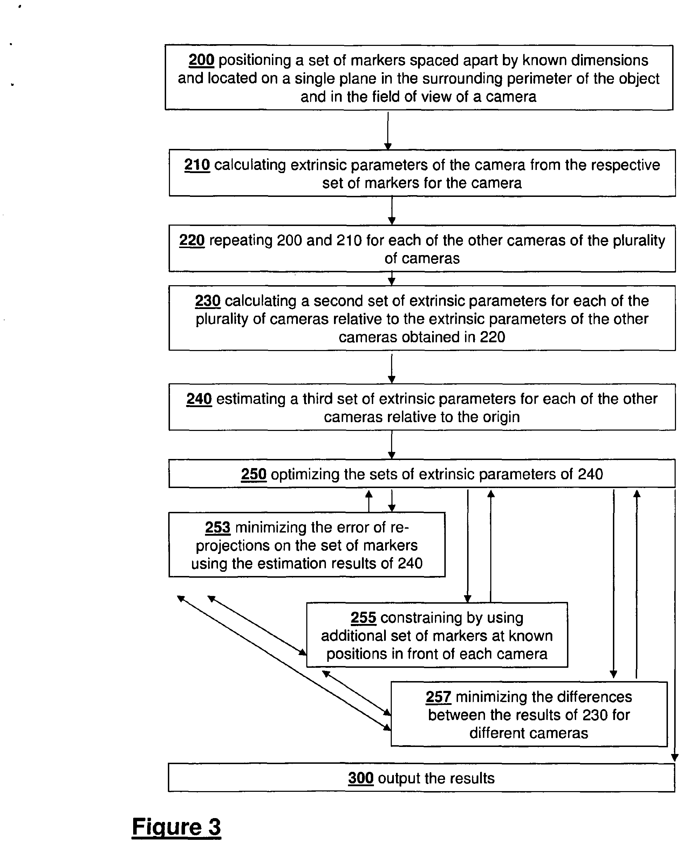

With respect to the cameras of Figure 1, for example the cameras 2F (front) and 2R (right) view a test board such as a chequered board 4 as shown in Figure 3 in view 3F and 3R. That is, the same board 4 is viewed by at least two cameras each.

For the setup as depicted in Figures 1 and 2, a method of calibration is subsequently described. It should be stressed again that the number of cameras in this example is four, however the number of cameras could be varied and more cameras may be chosen. In the following, the method of calibration relates to a camera system as depicted in Figure 1 with four cameras 2F, 2B, 2L, and 2R, as described above. These cameras 2F, 2B, 2L, and 2R may produce views 3F, 3B, 3L and 3R as discussed with respect to Figure 2.

Assuming that an intrinsic calibration for each camera, here 2F, 2B, 2L, and 2R, of the camera system is known and has been achieved by a suitable calibration method, the determination of extrinsic parameters is assumed to decouple from the calibration of the intrinsic parameters. The extrinsic parameters, that are rotational and translational parameters, are now derivable from the single planes showing a set of test markers such as the chequered boards 4, see for example Figure 2, for which the only requirement is that their dimensions should be known. That is, the outer size of the set of test markers should be known and the distance between test markers should be known. Typically the test markers are located in a substantially flat plane. For the chequered board 4, its size should be known and the size of the black and white squares or rectangles of the board should be known.

Typically, fisheye-like cameras such as the cameras 2F, 2B, 2L, and 2R of Figure 2 have different mapping mechanisms. A specific camera response function describing the camera behaviour of each camera may be difficult to obtain. Therefore, distortions may be approximated by suitable approximation functions such a polynomials or splines.

In the following, the translation matrix **T** describes extrinsic parameters for the translation of the pattern / set of markers to the camera and further the rotational matrix **R** describes rotational extrinsic parameters such as Euler angles. In the external, pattern coordinate system, a point is described as **X = [X, Y, Z, 1]'.** Throughout the following description a notation of vectors with a plurality of components may be denoted as [x,y,z], for example. A transposed vector may be denoted as [x, y, z]' or $[x,y,z]^T$. A projection of the point **X = [X, Y, Z, 1]'** as viewed by the image of one of the fisheye cameras is described as x = [x, y, z]'. Here, as discussed above, z may be given by an approximation such as a polynomial approximation of the distortion of the respective camera as

$$z = a_0 + a_1 d + a_2 d^2 ... + a_n d^n,$$

where d denotes the distance of the projected point with respect to the image center, n denotes the degree of the polynomial chosen for the approximation.

In the following, **H** denotes the projection matrix, for which it is important to note that the cross product of H with x is zero, because H and x are collinear. **H** is given by

$$\mathbf{H} = \begin{bmatrix} R_{11}, R_{12}, R_{13}, T_1 \\ R_{21}, R_{22}, R_{22}, T_2 \\ R_{31}, R_{32}, R_{33}, T_3 \\ 0 \quad 0 \quad 0 \quad 1 \end{bmatrix} \qquad (1)$$

For the following, it is assumed that Z = 0, that is, the respective point is located on the XY plane of the external, pattern coordinate system. Under this assumption, the following equation may be obtained

$$\begin{bmatrix} x \\ y \\ z \end{bmatrix} \times \begin{bmatrix} R_{11}, R_{12}, T_1 \\ R_{21}, R_{22}, T_2 \\ R_{31}, R_{32}, T_3 \end{bmatrix} \begin{bmatrix} X \\ Y \\ 1 \end{bmatrix} = 0 \qquad (2)$$

From equation (2) we derive the following linear system, taking into account the approximation of the distortions for z

$$y_i(R_{31}X_i + R_{32}Y_i + T_3) - (a_0 + ... + a_n d^n)(R_{21}X_i + R_{22}Y_i + T_2) = 0$$
$$(a_0 + ... + a_n d^n)(R_{11}X_i + R_{12}Y_i + T_1) - x_i(R_{31}X_i + R_{32}Y_i + T_3) = 0 \qquad (3)$$
$$x_i(R_{21}X_i + R_{22}Y_i + T_2) - y_i(R_{11}X_i + R_{12}Y_i + T_1) = 0$$

For starting, only the last two equations are considered, for all points located on the test board, from which one may obtain

$$\mathbf{L} \cdot \mathbf{M} = 0 \qquad (4)$$

using the following definitions

$$\mathbf{M} = [R_{11}, R_{12}, R_{21}, R_{22}, T_1, T_2]'$$

and

$$\mathbf{L} = \begin{bmatrix} -y_1 X_1, -x_1 Y_1, x_1 X_1, y_1 Y_1, -x_1, y_1 \\ -y_2 X_2, -x_2 Y_2, x_2 X_2, y_2 Y_2, -x_2, y_2 \\ -y_3 X_3, -x_3 Y_3, x_3 X_3, y_3 Y_3, -x_3, y_3 \end{bmatrix} \qquad (5)$$

Since the number of points from the set of markers, such as the chequered board is normally much bigger than the number of unknowns, it is possible to solve the linear system by least square criteria, such as

$$\min \|\mathbf{L} \cdot \mathbf{M}\| \qquad \text{subject to} \qquad \|\mathbf{M}\|^2 = 1.$$

Furthermore it should be noted that the columns of the rotational matrix **R** are orthonormal. Therefore, the remaining components of the rotational matrix **R** are uniquely determined.

Within the system, the extrinsic rotational and translational parameters are thus determined with the exception of $T_3$.

In the following, to solve for T3, the first two equations of (3) are used, taking into account the expressions obtained above for the rotational and translational parameters, **R** and **T**. The following expression is then obtained

$$\begin{bmatrix} A_1, A_1 d_1 ... A_1 d_{1,1}{}^n \\ C_1, C_1 d_1 ... C_1 d_1{}^n \\ ... \\ A_k, A_k d_k ... A_k d_k{}^n \\ C_k, C_1 d_k ... C_1 d_k{}^n \end{bmatrix} \cdot \begin{bmatrix} a_0 \\ ... \\ a_N \end{bmatrix} - T_3 \begin{bmatrix} y_1 \\ x_1 \\ ... \\ y_N \\ x_N \end{bmatrix} = \begin{bmatrix} B_1 \\ D_1 \\ ... \\ B_k \\ D_k \end{bmatrix} \qquad (6)$$

wherein the following abbreviations are used

$$\begin{aligned} A_j &= R_{21} X_j + R_{22} Y_j \\ B_j &= y_j (R_{31} X_j + R_{32} Y_j) \\ C_j &= R_{11} X_j + R_{12} Y_j + T_1 \\ D_j &= x_j (R_{31} X_j + R_{i,32} X_j) \end{aligned} \qquad (7)$$

where the index j denotes the point on the test board, i.e. the test set of markers used for the calibration.

As for equation (6), an overdetermined linear system is obtained. This system may be solved by using the Moore-Penrose pseudoinverse (hereafter, just pseudoinverse) is to compute a best fit (such as least squares) solution to the system of linear equations. This may then also serve to a minimum (Euclidean) norm solution to a system of linear equations with multiple solutions. It should be noted that the pseudoinverse is defined and unique for all matrices whose entries are real or complex numbers. It may be implemented using the singular value decomposition (SVD).

Solving for $T_3$, we obtain

$$T_3 = \left( \begin{bmatrix} A_1, A_1 d_1 ... A_1 d_{1,1}{}^n \\ C_1, C_1 d_1 ... C_1 d_1{}^n \\ ... \\ A_k, A_k d_k ... A_k d_k{}^n \\ C_k, C_1 d_k ... C_1 d_k{}^n \end{bmatrix} \cdot \begin{bmatrix} a_0 \\ ... \\ a_N \end{bmatrix} - \begin{bmatrix} B_1 \\ D_1 \\ ... \\ B_k \\ D_k \end{bmatrix} \right) \cdot pseudonverse \left( \begin{bmatrix} y_1 \\ x_1 \\ ... \\ y_N \\ x_N \end{bmatrix} \right) \qquad (8)$$

from which now all parameters of the rotational and translational matrices, **R** and **T,** have been determined. That is, for each of the cameras of Figures 1 and 2, and for each particular test board, the extrinsic parameters have been obtained.

It is then possible, to express the extrinsic parameters of the second camera, loosely speaking the second camera, relative to the extrinsic parameters of the first camera, loosely speaking relative to the first camera. If, for example, the first camera is the front camera and the second camera is the right camera, as shown in Figures 1 and 2, $RBoard_{1L}$ and $RBoard_{1R}$ represent the left and right rotation matrices of the board relative to camera 1. The corresponding translational parameters are denoted as $TBoard_{1L}$ and $TBoard_{1R}$, respectively. The second camera is then expressed in its position relative to the first camera viz:

$$R_1 Camera_2 = RBoard_{1R} * RBoard_{1L}{}^{-1} = RBoard_{1R} * RBoard_{1L}{}^T$$

$$T_1 Camera_2 = TBoard_{1R} - R_1 Camera_2 * TBoard_{2L} \qquad (9)$$

Within the above scheme, the parameters of camera 2 have been expressed relative to camera 1. Following this scheme, the third camera, camera 3, in Figure 1 and 2 the back camera, is expressed relative to camera 2. Further, the fourth camera, camera 4, in Figures 1 and 2 on the left side, is expressed relative to camera 1.

It is now possible to express the extrinsic parameters of camera 3 (rear) relative to camera 1 in two different ways. One may either use the parameters of the second camera as an intermediate result or likewise one may use the parameters of the fourth camera as an intermediate result. These two options may be expressed by the following two

expressions

$$R_1Camera_3 = R_1Camera_2 * R_2Camera_3$$

$$T_1Camera_3 = R_2Camera_3 * T_2Camera_3 + T_1Camera_2$$
(10)

$$R_1Camera_3 = R_1Camera_4 * R_4Camera_3$$

$$T_1Camera_3 = R_4Camera_3 * T_4Camera_3 + T_1Camera_4$$
(11)

For obtaining an overall reference point, the extrinsic parameters of the front camera, camera 1, may be determined by placing the set of test markers, i.e. the calibration board on the ground, typically in front of the camera. This position of the calibration board in front of the ground is chosen such that the middle axis of the board approximately coincides with the middle of the front of the vehicle and thus with the middle starting point for calibration. The board is thus chosen to be substantially parallel to the car along its axis. In this way a front camera extrinsic calibration relative to the car is achieved. Although this calibration is very coarse and approximate, it is simple and easy to realize and provides a starting point for subsequent calibration.

The dimensions of the set of test markers, the board, are predetermined and known and may be used as input for the above method. Thus, the extrinsic parameters for the first camera are obtained with respect to an overall reference point.

The parameters of the remaining 3 cameras, in this example, without limiting the method, the rear camera 3, the left camera 4 and the right camera 2, are now expressed relative to the origin, which is relative to the reference point, viz

$$RCamera_2Orig = RCamera_1Orig * R_1Camera_2$$

$$T_1Camera_2Orig = RCam_1Orig * T_1Camera_2Orig + TCam_1Orig$$

$$RCamera_3Orig = RCamera_1Orig * R_1Camera_3$$

$$T_1Camera_3Orig = RCam_1Orig * T_1Camera_3Orig + TCam_1Orig$$
(12)

$$RCamera_4Orig = RCamera_1Orig * R_1Camera_4$$

$$T_1Camera_4Orig = RCam_1Orig * T_1Camera_4Orig + TCam_1Orig$$

In this way, an estimate of the extrinsic parameters for all cameras of the camera system, here cameras 1 - 4, is obtained. These values of the estimate would be precise in the absence of camera noise and distortions, which would refer to an ideal scenario. However, since neither camera noise nor distortions can be neglected, the measurements obtained from each of the cameras are taken as input for an optimization procedure.

The optimization may be performed using a mean least-square method, using, for example, a Levenberg-Marquardt algorithm which is a combination of a Newton-Gauss and gradient descent method.

Within the optimization, further constraints are taken into consideration. The re-projections on the calibration boards using the estimated results should provide minimal error. Further, the camera parameters calculated by equations (10) and (11), i.e. by the above-described two different ways, should yield the same results. Additional boards located in front of each camera, usually on the ground, may be used, such that these points being on the ground can provide further constraints for the optimization problem.

Figure 3 show a schematic representation of the method for calibrating the extrinsic parameters of a camera system according to the present invention. The camera system may again refer to the camera system as depicted and discussed with respect to Figures 1 and 2.

In step 200, the positioning a set of markers spaced apart by known dimensions and located on a single plane in the surrounding perimeter of the object and in the field of view of a camera. In step 210, the method refers to calculating extrinsic parameters of the camera from the respective set of markers for the camera. In step 220, the steps 200 and 210 are repeated for each of the other cameras of the plurality of cameras. In step 230, a second set of extrinsic parameters for each of the plurality of cameras relative to the extrinsic parameters of the other cameras obtained in 220 is calculated. In step 240, an estimate for a third set of extrinsic parameters for each of the other cameras relative to the origin is provided. In step 250, the set of extrinsic parameters of step 240 is optimized. The optimization of step 250 takes into account 253 minimizing the error of re-projections on the set of markers using the estimation results of 240 and 257 minimizing the differences between the results of 230 for different cameras. Additionally, the optimization of step 250 may apply a further constraining 255 by using additional set of markers at known positions in front of each camera. In step 300, the results are output an output unit of a control system which is in control of the camera system.

The above described method may be implemented in a control system or control unit which may represent a computer program product. The method may be stored on at least one computer readable medium such as a hard disk, a flash disk, a flash memory or any other modern memory unit comprised in the above control system. The memory thus may have computer-executable instructions for performing the steps of the method of one of the preceding claims when run on a computer such as the control unit. These computer-executable instruction may, for example be coded in an object-oriented computer language such as C++.

The data obtained from the camera system may advantageously be taken into account by a control unit of the object. The control unit may provide an image of the data on an appropriate display, usually easily visible for the driver of the vehicle. The results obtained may also be combined with speed control systems controlling the speed of the object. Predetermined thresholds regarding one or more of visibility, speed, vicinity of objects, change of speed of nearby objects may be taken into account and may be signaled to the driver or person in control of the object for assisting his/her decisions.

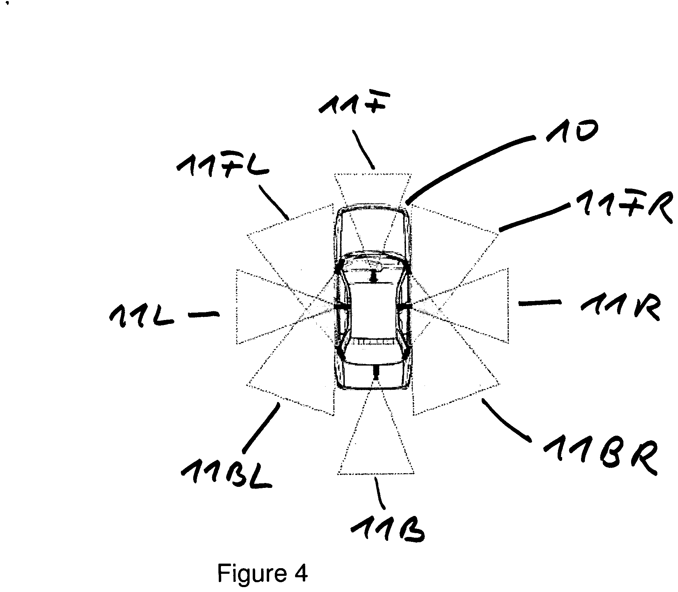

Figure 4 shows a further example. A vehicle 10 is equipped with a camera system with eight cameras, 11F, indicating the front, 11B, indicating the rear / back, 11R, indicating the right, 11L, indicating the left, 11FL indicating a camera viewing the front left of the vehicle, 11FR, indicating a camera view the front right of the vehicle, 11BL, indicating a camera viewing the rear left of the vehicle, and 11BR, indicating a camera viewing the rear right of the camera. The set of cameras 11F, 11B, 11L, 11R, 11FL, 11FR, 11BL and 11BR substantially cover the surrounding perimeter of the vehicle 10. Similar to the camera system shown in Figures 1 and 2, these cameras have overlapping fields of view.

It is further possible to combine the data obtained from the camera system with pattern recognition units capable of comparing the obtained data with predetermined patters such as the silhouette of a person, an animal or, in addition the silhouette of heat radiating sources. This may be especially important for providing sufficient vision at night to safely guide the object.

It may further be possible that the number of cameras for visual perception of the surrounding and further cameras for infrared, i.e. heat perception of the surrounding may be different or that these cameras are directed to different main directions, in order to cover areas outside of the headlights of the vehicle.

It may further be possible that the cameras may register traffic information such as road signs or traffic lights or warning signs, in particular those not in the field of view of the driver such that these additional information can be taken into account.

While the invention has been shown and described with reference to a certain preferred embodiment thereof, it will be understood by those skilled in the art that various changes in form and details may be made therein without departing from the scope of the invention as defined by the appended claims.

**Claims**

1. A method for calibrating a camera system comprising a plurality of at least four cameras (2F, 2B, 2L, 2R, 11F, 11B, 11L, 11R, 11FR, 11FL, 11BL, 11BR) having a predetermined intrinsic calibration, the cameras being provided on an object (1) such as a vehicle (10) and covering a surrounding perimeter of the object, comprising the steps of:

   for each of the plurality of cameras:

   (a) positioning (200) a set of markers spaced apart by known dimensions and located on a single plane in the surrounding perimeter of the object and in the field of view (3F, 3B, 3L, 3R) of that camera; and
   (b) calculating (210) extrinsic parameters of that camera from the respective set of markers for that camera;

   wherein for at least a first camera of the plurality of cameras, the respective set of markers comprises the origin such that the extrinsic parameters of the at least a first camera refer to the origin;
   and further:

   (c1) calculating (230) a second set of extrinsic parameters for at least a second and a fourth camera of the plurality of cameras relative to the extrinsic parameters of the first camera obtained in step (b);
   wherein the second camera is a neighbouring camera of the first camera in a clockwise direction and the fourth camera is a neighbouring camera of the first camera in a counter-clockwise direction;
   (c2) calculating (230) two second sets of extrinsic parameters for at least a third camera of the plurality of cameras relative to the extrinsic parameters of the first camera obtained in step (b) based on the result of step (c1);
(d) estimating (240) a third set of extrinsic parameters for each of the plurality of cameras except the first camera relative to the origin based on the results of steps (c1) and (c2); and
(e) optimizing (250) the sets of extrinsic parameters;

wherein the optimization minimizes the error of re-projections on the set of markers which use the estimation results of step (d) and further minimizes the differences between the results of step (c2).

2. The method according to claim 1, wherein the field of view of each camera at least partially overlaps with at least one of its neighbouring cameras.

3. The method according to claim 2, wherein the set of markers is selected in the overlapping region of the field of view of neighbouring cameras.

4. The method according to any one of claims 1 - 3, wherein the optimization is further constrained by using additional set of markers at known positions in front of each camera.

5. The method according to any one of claims 1 - 4, wherein distortions perpendicular to the projection plane of a camera are approximated by polynomials.

6. The method according to any one of claims 1 - 5, wherein the cameras are fisheye-cameras.

7. The method according to any one of claims 1 - 6, wherein the cameras are symmetrically placed with respect to at least one symmetry axis of the object.

8. The method according to any one of claims 1 - 7, wherein the number of cameras is four.

9. A computer program product comprising at least one computer readable medium having computer-executable instructions for performing the steps of the method of one of the claims 1 - 8 when run on a computer.

**Patentansprüche**

1. Verfahren zum Kalibrieren eines Kamerasystems, das eine Vielzahl von mindestens vier Kameras (2F, 2B, 2L, 2R, 11F, 11B, 11L, 11R, 11FR, 11FL, 11BL, 11BR) umfasst, die eine vorbestimmte intrinsische Kalibrierung aufweist, wobei die Kameras auf einem Objekt (1), wie etwa einem Fahrzeug (10), bereitgestellt sind und einen umgebenden Umkreis des Objekts abdecken, umfassend die folgenden Schritte:

für jede der Vielzahl von Kameras:

(a) Positionieren (200) eines Satzes von Markierungen, um bekannte Abmessungen beabstandet und auf einer einzelnen Ebene in dem umgebenden Umkreis des Objekts und im Sichtfeld (3F, 3B, 3L, 3R) dieser Kamera angeordnet; und
(b) Berechnen (210) extrinsischer Parameter der Kamera aus dem jeweiligen Satz von Markierungen für diese Kamera;

wobei für mindestens eine erste Kamera der Vielzahl von Kameras der jeweilige Satz von Markierungen den Ausgangspunkt umfasst, sodass sich die extrinsischen Parameter der mindestens einen ersten Kamera auf den Ausgangspunkt beziehen;
und ferner:

(c1) Berechnen (230) eines zweiten Satzes von extrinsischen Parametern für mindestens eine zweite und eine vierte Kamera aus der Vielzahl von Kameras relativ zu den in Schritt (b) erlangten extrinsischen Parametern der ersten Kamera;
wobei die zweite Kamera eine in einer Richtung im Uhrzeigersinn zur ersten Kamera benachbarte Kamera ist und die vierte Kamera eine in einer Richtung gegen den Uhrzeigersinn zur ersten Kamera benachbarte Kamera ist;

(c2) Berechnen (230) von zwei zweiten Sätzen von extrinsischen Parametern für mindestens eine dritte Kamera der Vielzahl von Kameras relativ zu den in Schritt (b) erlangten extrinsischen Parametern der ersten Kamera auf Grundlage des Ergebnisses von Schritt (c1);

(d) Schätzen (240) eines dritten Satzes von extrinsischen Parametern für jede der Vielzahl von Kameras außer der ersten Kamera relativ zu dem Ausgangspunkt auf Grundlage der Ergebnisse der Schritte (c1) und (c2); und

(e) Optimieren (250) des Satzes von extrinsischen Parametern;

wobei die Optimierung den Fehler von Rückprojektionen auf den Satz von Markierungen, die die Schätzergebnisse von Schritt (d) verwenden, minimiert und ferner die Differenzen zwischen den Ergebnissen von Schritt (c2) minimiert.

2. Verfahren nach Anspruch 1, wobei das Sichtfeld jeder Kamera zumindest teilweise mit mindestens einem ihrer benachbarten Kameras überlappt.

3. Verfahren nach Anspruch 2, wobei der Satz von Markierungen in dem überlappenden Bereich des Sichtfelds von benachbarten Kameras ausgewählt wird.

4. Verfahren nach einem der Ansprüche 1-3, wobei die Optimierung ferner durch Verwenden eines zusätzlichen Satzes von Markierungen an bekannten Positionen vor jeder Kamera beschränkt ist.

5. Verfahren nach einem der Ansprüche 1-4, wobei Verzerrungen senkrecht zur Projektionsebene einer Kamera durch Polynome approximiert werden.

6. Verfahren nach einem der Ansprüche 1-5, wobei die Kameras Fischaugenkameras sind.

7. Verfahren nach einem der Ansprüche 1-6, wobei die Kameras in Bezug auf mindestens eine Symmetrieachse des Objekts symmetrisch platziert sind.

8. Verfahren nach einem der Ansprüche 1-7, wobei die Anzahl der Kameras vier ist.

9. Computerprogrammprodukt, umfassend mindestens ein computerlesbares Medium mit vom Computer ausführbaren Anweisungen zum Durchführen der Schritte des Verfahrens nach einem der Ansprüche 1-8 bei Ausführung auf einem Computer.

**Revendications**

1. Méthode pour la calibration d'un système caméra comprenant une pluralité d'au moins quatre caméras (2F, 2B, 2L, 2R, 11F, 11B, 11L, 11R, 11FR, 11FL, 11BL, 11BR,) ayant une calibration intrinsèque prédéterminée, les caméras étant prévues sur un objet (1) tel qu'un véhicule (10) et couvrant un périmètre environnant de l'objet, comprenant les étapes :

pour chacune de la pluralité de caméras :

(a) de positionnement (200) d'un ensemble de marqueurs espacés par des dimensions connues et situés dans un seul plan dans le périmètre environnant de l'objet et dans le champ de vision (3F, 3B, 3L, 3R) de cette caméra ; et

(b) de calcul (210) des paramètres extrinsèques de cette caméra à partir de l'ensemble respectif de marqueurs pour cette caméra ;

dans laquelle, pour au moins une première caméra de la pluralité de caméras, l'ensemble de marqueurs respectifs comprend l'origine de sorte que les paramètres extrinsèques de l'au moins une première caméra se rapportent à l'origine ;

et en outre :

(c1) de calcul (230) d'un deuxième ensemble de paramètres extrinsèques pour au moins une deuxième et une quatrième caméra de la pluralité de caméras par rapport aux paramètres extrinsèques de la première caméra obtenus à l'étape (b) ;

dans laquelle la deuxième caméra est une caméra voisine de la première caméra dans le sens des aiguilles d'une montre et la quatrième caméra est une caméra voisine de la première caméra dans le sens inverse des aiguilles d'une montre ;

(c2) de calcul (230) de deux deuxièmes ensembles de paramètres extrinsèques pour au moins une troisième caméra de la pluralité de caméras par rapport aux paramètres extrinsèques de la première caméra obtenus à l'étape (b) sur la base du résultat de l'étape (c1) ;

(d) d'estimation (240) d'un troisième ensemble de paramètres extrinsèques pour chacune de la pluralité de caméras, à l'exception de la première caméra, par rapport à l'origine, sur la base des résultats des étapes (c1) et (c2) ; et

(e) d'optimisation (250) des ensembles de paramètres extrinsèques ;

dans laquelle l'optimisation minimise l'erreur de reprojection sur l'ensemble de marqueurs qui utilisent les résultats d'estimation de l'étape (d) et minimise en outre les différences entre les résultats de l'étape (c2).

2. Méthode selon la revendication 1, dans laquelle le champ de vision de chaque caméra chevauche au moins partiellement au moins une des caméras voisines.

3. Méthode selon la revendication 2, dans laquelle l'ensemble de marqueurs est sélectionné dans la région de chevauchement du champ de vision de caméras voisines.

4. Méthode selon l'une quelconque des revendications 1 à 3, dans laquelle l'optimisation est en outre contrainte en utilisant un ensemble supplémentaire de marqueurs à des positions connues en face de chaque caméra.

5. Méthode selon l'une quelconque des revendications 1 à 4, dans laquelle les distorsions perpendiculaires au plan de projection d'une caméra sont approximées par des polynômes.

6. Méthode selon l'une quelconque des revendications 1 à 5, dans laquelle les caméras sont des caméras fisheye.

7. Méthode selon l'une quelconque des revendications 1 à 6, dans laquelle les caméras sont placées symétriquement par rapport à au moins un axe de symétrie de l'objet.

8. Méthode selon l'une quelconque des revendications 1 à 7, dans laquelle le nombre de caméras est de quatre.

9. Produit programme informatique comprenant au moins un support lisible par un ordinateur ayant des instructions exécutables par un ordinateur pour effectuer les étapes de la méthode selon l'une des revendications 1 à 8 lorsqu'elles sont exécutées sur un ordinateur.

1 0. Mai 2011

Figure 1

3F 4 3R

Front

Right

Rear

Left

3B

3L

Figure 2

**200** positioning a set of markers spaced apart by known dimensions and located on a single plane in the surrounding perimeter of the object and in the field of view of a camera

**210** calculating extrinsic parameters of the camera from the respective set of markers for the camera

**220** repeating 200 and 210 for each of the other cameras of the plurality of cameras

**230** calculating a second set of extrinsic parameters for each of the plurality of cameras relative to the extrinsic parameters of the other cameras obtained in 220

**240** estimating a third set of extrinsic parameters for each of the other cameras relative to the origin

**250** optimizing the sets of extrinsic parameters of 240

**253** minimizing the error of re-projections on the set of markers using the estimation results of 240

**255** constraining by using additional set of markers at known positions in front of each camera

**257** minimizing the differences between the results of 230 for different cameras

**300** output the results

## Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2200311 A1

**Non-patent literature cited in the description**

- **GANDHI T. ; TRIVEDI M. M.** *IEEE Transactions on Intelligent Transportation System,* September 2006, vol. 7 (3
- **ROGER Y. TSAI.** An Efficient and Accurate Camera Calibration Technique for 3D Machine Vision. *Proceedings of IEEE Conference on Computer Vision and Pattern Recognition,* 1986, 364-374
- **ROGER Y. TSAI.** A versatile Camera Calibration Technique for High-Accuracy 3D Machine Vision Metrology Using Off-the-Shelf TV Cameras and Lenses. *IEEE Journal of Robotics and Automation,* August 1987, vol. RA-3 (4), 323-344
- **Z. ZHANG.** A flexible new technique for camera calibration. *IEEE Transactions on Pattern Analysis and Machine Intelligence,* 2000, vol. 22 (11), 1330-1334